# EUROPÄISCHE PATENTSCHRIFT

(11) **EP 3 259 797 B1**
(45) Veröffentlichungstag und Bekanntmachung des Hinweises auf die Patenterteilung: **16.09.2020**
(21) Anmeldenummer: 16704229.0
(22) Anmeldetag: 12.02.2016
(51) Int. Cl.: H01M 10/42, H01M 10/44, H01M 10/48, H01M 2/34, B60L 3/00, B60L 50/64, B60L 58/10

(54) **BATTERIEZELLE FÜR EINE BATTERIE EINES KRAFTFAHRZEUGS, BATTERIE SOWIE KRAFTFAHRZEUG**
BATTERY CELL FOR A BATTERY OF A MOTOR VEHICLE, BATTERY AND MOTOR VEHICLE
ÉLÉMENT DE BATTERIE POUR BATTERIE DE VÉHICULE À MOTEUR, BATTERIE AINSI QUE VÉHICULE À MOTEUR

(30) Priorität: 18.02.2015 DE 102015002080
(43) Veröffentlichungstag der Anmeldung: 27.12.2017
(73) Patentinhaber: Audi AG, 85045 Ingolstadt (DE)
(72) Erfinder: HINTERBERGER, Michael, 85055 Ingolstadt (DE); HELLENTHAL, Berthold, 90596 Schwanstetten (DE)
(74) Vertreter: Neuhausen, Marc-Alexander
(86) Internationale Anmeldenummer: PCT/EP2016/053082
(87) Internationale Veröffentlichungsnummer: WO 2016/131734

(56) Entgegenhaltungen:
- WO-A1-2004/047215
- DE-A1-102008 010 971
- DE-A1-102012 011 061
- DE-A1-102012 210 595
- DE-A1-102012 213 053
- DE-A1-102012 214 956
- DE-A1-102013 204 538

## Beschreibung

Die Erfindung betrifft eine Batteriezelle für eine Batterie eines Kraftfahrzeugs mit einem galvanischen Element mit einer ersten Elektrode und einer zweiten Elektrode, einem Batteriezellengehäuse mit einem ersten Anschluss und einem zweiten Anschluss, zumindest einer Sensoreinrichtung zum Erfassen einer physikalischen und/oder chemischen Eigenschaft der Batteriezelle und einer Steuereinrichtung, wobei das galvanische Element in dem Batteriezellengehäuse angeordnet ist. Die Erfindung betrifft außerdem eine Batterie sowie ein Kraftfahrzeug.

Bei an sich bekannten Batteriezellen ist üblicherweise jeweils ein galvanisches Element in einem Batteriezellengehäuse angeordnet. Zum Bereitstellen einer bestimmten Spannung beziehungsweise eines bestimmen Stromes können mehrere Batteriezellen zu einer Batterie zusammengeschaltet werden. Diese Batterien werden heutzutage insbesondere als Traktionsbatterien in Kraftfahrzeugen, beispielsweise in Elektro- oder Hybridfahrzeugen, zum Antreiben der Kraftfahrzeuge eingesetzt. Beim Einsatz der Batterien in Kraftfahrzeugen müssen diese jedoch gewisse Anforderungen erfüllen. Da die Traktionsbatterien einige hundert Volt bereitstellen können, müssen besondere Sicherheitsmaßnahmen getroffen werden, um beispielsweise eine Gefährdung von Personen zu vermeiden. Außerdem muss eine hohe Verfügbarkeit der Batterie gewährleistet werden. Diese Verfügbarkeit ist insbesondere abhängig von einem Schädigungsgrad beziehungsweise einer Alterung der Batterie. Da die Batteriezellen fertigungsbedingt Schwankungen in ihrer Kapazität sowie in ihrem Innenwiderstand aufweisen, werden sie in der Regel unterschiedlich schnell geladen und entladen. Dabei kann es zu einer Schädigung der Batterie kommen, wenn einzelne Zellen beispielsweise tiefenentladen oder überladen werden. Eine Schädigung beziehungsweise ein Ausfall einer Batteriezelle kann dabei insbesondere in einer Reihenschaltung der Batteriezellen einen Ausfall der gesamten Batterie zur Folge haben.

Um eine Batterie oder einzelne Batteriezellen zu überwachen, sind aus dem Stand der Technik Maßnahmen bekannt. So zeigt die DE 10 2010 011 740 A1 eine Batterie, bei welcher ein Zustand einzelner Batteriezellen von Sensoren erfasst und drahtlos an eine übergeordnete Zentraleinheit versendet wird. In der WO 2012/034045 A1 ist ein Batterieüberwachungssystem beschrieben, bei welchem eine Messeinrichtung an oder in einer Batteriezelle angebracht wird. Auch die WO 2004/047215 A1 offenbart ein Batteriemanagementsystem, bei welchem zur Verlängerung der Lebensdauer der Batterie physikalische Eigenschaften derselben überwacht werden. Ferner offenbart die DE 10 2012 011 061 A1 eine Energieversorgungseinrichtung mit einer ersten Leistung sowie ein Verfahren zum Betrieb dieser Energieversorgungseinrichtung. Die DE 10 2012 213 053 A1 offenbart die eine Batterie, eine Batteriezelle mit Sicherungsvorrichtung sowie ein Verfahren zum Schutz einer Batteriezelle. Darüber hinaus offenbart die DE 10 2013 204 538 A1 ein Batteriezellmodul und ein Verfahren zum Bertreiben eines Batteriezellmoduls. Weiterhin offenbart die DE 10 2012 210 595 A1 eine Batteriezelle. Schließlich offenbart die DE 10 2012 214 956 A1 eine Halbbrückenschaltung.

Es ist Aufgabe der vorliegenden Erfindung, Batteriezellen besonders sicher zu gestalten.

Diese Aufgabe wird erfindungsgemäß durch eine Batteriezelle, eine Batterie sowie ein Kraftfahrzeug mit den Merkmalen gemäß den unabhängigen Patentansprüchen gelöst. Vorteilhafte Ausführungen der Erfindung sind Gegenstand der abhängigen Patentansprüche, der Beschreibung und der Figur.

Die erfindungsgemäße Batteriezelle für eine Batterie eines Kraftfahrzeugs umfasst ein galvanisches Element mit einer ersten Elektrode und einer zweiten Elektrode, ein Batteriezellengehäuse mit einem ersten Anschluss und einem zweiten Anschluss, zumindest eine Sensoreinrichtung zum Erfassen einer physikalischen und/oder chemischen Eigenschaft der Batteriezelle und eine Steuereinrichtung, wobei das galvanische Element in dem Batteriezellengehäuse angeordnet ist. Darüber hinaus weist die Batteriezelle eine Schalteinrichtung auf, mittels welcher der erste Anschluss und der zweite Anschluss elektrisch verbindbar sind. Außerdem ist die Steuereinrichtung dazu ausgelegt, in Abhängigkeit der von der Sensoreinrichtung erfassten physikalischen und/oder chemischen Eigenschaft die Schalteinrichtung zum Überbrücken der Batteriezelle zu schließen.

Das galvanische Element ist insbesondere als eine Sekundärzelle ausgestaltet, welche zum Versorgen einer elektrischen Komponente entladbar und nach der Entladung wieder aufladbar ist. Das galvanische Element ist in dem Batteriezellengehäuse angeordnet, wobei die erste Elektrode des galvanischen Elementes elektrisch mit dem ersten Anschluss gekoppelt ist und die zweite Elektrode des galvanischen Elementes mit dem zweiten Anschluss elektrisch gekoppelt ist. Somit kann die von dem galvanischen Element bereitgestellte elektrische Energie an den Anschlüssen beispielsweise zum Versorgen einer elektrischen Komponente abgegriffen werden. Auch ist es möglich, dem galvanischen Element über die Anschlüsse Energie zum Laden zuzuführen. Außerdem kann die Batteriezelle über die Anschlüsse mit anderen gleichartigen Batteriezellen zu einer Batterie verschaltet werden.

Die zumindest eine Sensoreinrichtung, welche innerhalb oder außerhalb des Batteriezellengehäuses angeordnet sein kann, dient zum Erfassen von physikalischen und/oder chemischen Eigenschaften der Batteriezelle. Die zumindest eine Sensoreinrichtung beziehungsweise der Sensor kann als ein sogenanntes Mikroelektromechanisches System (MEMS) ausgestaltet sein. Der Sensor kann beispielsweise als zumindest einer der folgenden Sensoren ausgestaltet sein: Vibrationssensor, Beschleunigungssensor, Gyroskop, Temperatursensor, Kraftsensor, Drucksensor, Biegungssensor, Dehnungssensor, Wegsensor, Neigungssensor, Distanzsensor, Näherungssensor, optischer Sensor, beispielsweise Optosensor, Lichtsensor, UV-Sensor, Farbsensor, IR-Sensor, insbesondere ein NDIR (non-dispersive infrared) Sensor, Spektrum-Sensor, Sensor zur Füllstandsmessung, beispielsweise zur Messung des Füllstands des Elektrolyten, Sensor zur Leitfähigkeitsmessung, beispielsweise zur Messung der Leitfähigkeit des Elektrolyten, Sensor zur Teilchendetektion zum Nachweisen freier, bewegter Moleküle, Atome oder Elementarteilchen, Sensor zur Strommessung, Magnetfeldsensor, Hall-Sensor, Sensor zur Spannungsmessung, Gassensor, beispielsweise für die Gaszusammensetzung innerhalb der Batteriezelle, elektrochemischer Sensor, beispielsweise für die chemische Zusammensetzung des Elektrolyten oder Gases, pH-Sensor, Ultraschallsensor, induktiver Sensor zur hochgenauen Abstandsmessung, Piezoelektrischer Sensor oder fotoelektrischer Sensor.

Die physikalischen und/oder chemischen Eigenschaften der Batteriezelle, also die von der zumindest einen Sensoreinrichtung erfassten Sensordaten, werden als Signale über einen Signalpfad an die Steuereinrichtung übertragen. Die Signalübertragung über den Signalpfad kann drahtlos, beispielsweise über Infrarot, Bluetooth, WLAN; RFID (radio frequency identification) oder WIFI, oder drahtgebunden erfolgen. Zum drahtgebundenen Übertragen können die zumindest eine Sensoreinrichtung und die Steuereinrichtung über elektrische Leitungen, beispielsweise flexible Leiterplatten, optische Leitungen, beispielsweise Glasfasern, oder über Bussysteme, beispielsweise LIN, CAN, I²C, SPI, UART, gekoppelt sein.

Dabei kann es vorgesehen sein, dass alle Sensoreinrichtungen der Batteriezelle und die Steuereinrichtung als Netzwerkknoten eines Netzwerkes ausgestaltet sind. Dabei kann das Netzwerk beispielsweise als eine mögliche Netzwerktopologie als ein vollvermaschtes Netz ausgeführt sein. Bei dem vollvermaschten Netz kann jede der Sensoreinrichtungen direkt oder über zumindest eine andere Sensoreinrichtung mit der Steuereinrichtung kommunizieren. Mit anderen Worten bedeutet dies, dass jede der Sensoreinrichtungen dazu ausgestaltet ist, das Signal einer anderen Sensoreinrichtung zu empfangen und weiterzuleiten. Durch diese redundanten Signalpfade ist die Signalübertragung zwischen der Steuereinrichtung und der Sensoreinrichtung und damit eine Überwachung der Batteriezelle besonders sicher gestaltet.

Die Steuereinrichtung kann zumindest einen Mikrocontroller, beispielsweise einen Digitalen Signalprozessor (DSP) oder einen FPGA (field programmable gate array) umfassen. Bei einem FGPA ergibt sich der Vorteil, dass sämtliche Funktionen der Steuereinrichtung, auch nachträglich, programmiert, beispielsweise hinzugefügt oder gelöscht, werden können. Die Steuereinrichtung kann auch mehr als einen Mikrocontroller aufweisen, welche verschiedene Funktionen beziehungsweise Aufgaben erfüllen. Diese Mikrocontroller können beispielsweise als ein Ein-Chip-System beziehungsweise ein SoC (System-on-a-Chip) ausgestaltet sein. Auch kann es vorgesehen sein, dass die Steuereinrichtung als ein dezentrales verteiltes System ausgestaltet ist, bei welchem die Mikrocontroller teilweise innerhalb des Batteriezellengehäuses und teilweise außerhalb des Batteriezellengehäuses angeordnet sind, und beispielsweise über eine Drahtlosübertragungseinrichtung miteinander kommunizieren.

Basierend auf den Signalen der zumindest einen Sensoreinrichtung kann die Steuereinrichtung batteriespezifische Kennwerte berechnen beziehungsweise ermitteln. Ein solcher batteriespezifischer Kennwert kann beispielsweise ein Ladezustand (State of Charge), ein sogenannter Gesundheitszustand (State of Health), eine Lebenserwartung beziehungsweise Restlebensdauer oder ein Schädigungsgrad der Batteriezelle sein. Dazu können beispielsweise Modelle für die Batteriezelle in der Steuereinrichtung hinterlegt sein, basierend auf welchen die Steuereinrichtung die batteriespezifischen Kenndaten ermittelt.

Die Schalteinrichtung kann beispielsweise als ein Relais oder als ein Halbleiterschaltelement ausgestaltet sein, wobei jeweils die Schalteinrichtung beispielsweise über eine Stromschiene mit den Anschlüssen des Batteriezellengehäuses verbunden ist. Wenn die Schalteinrichtung geöffnet ist, fließt kein Strom über die Stromschienen und die Schalteinrichtung zwischen den Anschlüssen. In dem geöffneten Zustand kann also die Batteriezelle bestimmungsgemäß zum Bereitstellen von elektrischer Energie und/oder zum Laden verwendet werden. Wenn die Schalteinrichtung geschlossen ist, so kann ein Strom über die Stromschienen und die Schalteinrichtung zwischen den Anschlüssen fließen. In diesem Fall ist das galvanische Element überbrückt.

Wenn die Steuereinrichtung beispielsweise eine Schädigung der Batteriezelle ermittelt hat, ist die Steuereinrichtung dazu ausgelegt, die Schalteinrichtung zum Schließen anzusteuern. Diese Möglichkeit der Überbrückung ist insbesondere bei einer Reihenschaltung von Batteriezellen besonders vorteilhaft. Wenn beispielsweise eine der seriell geschalteten Batteriezellen fehlerhaft ist, also eine Schädigung aufweist, so kann diese Batteriezelle mittels der Schalteinrichtung überbrückt werden. Gemäß dem Stand der Technik wurde durch eine fehlerhafte Batteriezelle der Stromfluss in der Reihenschaltung unterbrochen. Mittels der vorstehend beschriebenen Batteriezelle kann die fehlerhafte Batteriezelle auf einfache Weise überbrückt werden und ein Stromfluss über die Schalteinrichtung der fehlerhaften Batteriezelle zu den benachbarten Batteriezellen geführt werden. Anders ausgedrückt kann der Strom innerhalb der Reihenschaltung und somit eine Funktionstüchtigkeit der gesamten Batterie aufrecht erhalten werden. Somit kann die Batterie, welche beispielsweise in dem Kraftfahrzeug zum Antreiben des Kraftfahrzeugs angeordnet ist, weiterhin elektrische Energie bereitstellen. So hat in vorteilhafter Weise ein Fahrer des Kraftfahrzeugs die Möglichkeit, mit dem Kraftfahrzeug in eine Werkstatt zu fahren.

Zumindest eine der Elektroden ist über ein elektronisches Schaltelement mit einem der Anschlüsse verbunden, wobei das elektronische Schaltelement dazu ausgelegt ist, einen Stromfluss zwischen der Elektrode und dem jeweiligen Anschluss zu begrenzen, und die Steuereinrichtung dazu ausgelegt ist, in Abhängigkeit der von der zumindest einen Sensoreinrichtung erfassten physikalischen und/oder chemischen Eigenschaft das elektronische Schaltelement zum Begrenzen des Stromflusses anzusteuern. Das elektronische Schaltelement ist insbesondere als ein Halbleiterschalter ausgestaltet, bei welchem ein Stromfluss über das elektronische Schaltelement mittels einer Steuerspannung an dem elektronischen Schaltelement steuerbar ist. Das Schaltelement, welches beispielsweise als ein Leistungs-MOSFET (MetallOxid-Halbleiter-Feldeffekttransistor) oder als ein IGBT (insulated gate bipolar transistor) ausgestaltet sein kann, kann abhängig von der Steuerspannung in verschiedenen Bereichen betrieben werden. Wenn das elektronische Schaltelement in einem Sperrbereich betrieben wird, also wenn die Steuerspannung einen vorgegebenen Schwellwert unterschreitet, sperrt beziehungsweise blockiert das elektronische Schaltelement einen Stromfluss zwischen der Elektrode und dem jeweiligen Anschluss. Wenn das elektronische Schaltelement in einem linearen Bereich beziehungsweise einem Triodenbereich betrieben wird, so kann durch Erhöhen der Steuerspannung der Stromfluss linear erhöht werden. Wenn das elektronische Schaltelement in einem Sättigungsbereich betrieben wird, so kann zwischen dem Anschluss und der Elektrode ab einer bestimmten Steuerspannung ein konstanter, maximaler Strom fließen. Die Steuereinrichtung ist nun dazu ausgelegt, die Steuerspannung entsprechend zu regeln, sodass der basierend auf der erfassten physikalischen und/oder chemischen Eigenschaft als der geeignete Bereich bereitgestellt wird.

Die zumindest eine Sensoreinrichtung ist dazu ausgelegt, den erfassten Wert der physikalischen und/oder chemischen Eigenschaft nur dann an die Steuereinrichtung zu übermitteln, falls der erfasste Wert in einem ersten Fall einen vorgegebenen Schwellwert überschreitet oder in einem zweiten Fall einen vorgegebenen anderen Schwellwert unterschreitet. Anders ausgedrückt bedeutet dies, dass der erfasste Wert dann an die Steuereinrichtung übermittelt wird, wenn sich der erfasste Wert außerhalb einer vorgegebenen Wertebereiches befindet. Der Schwellwert kann beispielsweise ein maximaler Temperaturwert oder maximaler Druckwert innerhalb des Batteriezellengehäuses oder ein maximaler Stromwert zwischen den Anschlüssen und den Elektroden sein. Durch diese ereignisgesteuerte Übertragung der von der Sensoreinrichtung erfassten Daten kann sowohl senderseitig, also seitens der Sensoreinrichtungen, als auch empfängerseitig, also seitens der Steuereinrichtung, Energie gespart werden, da nur dann Energie zur Übertragung der Daten benötigt wird, wenn sich der erfasste Wert ändert. In selbiger Weise können auch die Daten an die Speichereinrichtung ereignisgesteuert übertragen werden. Diese energiesparende Maßnahme ist besonders vorteilhaft, wenn die Sensoreinrichtungen, die Steuereinrichtung und die Speichereinrichtung von dem galvanischen Element selbst mit elektrischer Energie versorgt werden.

Besonders bevorzugt ist die Schalteinrichtung in dem Batteriezellengehäuse angeordnet und mit dem Batteriezellengehäuse thermisch gekoppelt. Somit ist die Schalteinrichtung besonders platzsparend in dem Batteriezellengehäuse angeordnet und Wärme, welche im Betrieb der Schalteinrichtung entsteht, kann an das Batteriezellengehäuse abgeführt und weiter an die Umgebung der Batteriezelle abgegeben werden.

Wenn die zumindest eine Sensoreinrichtung beispielsweise einen Kraftsensor aufweist, welcher dazu ausgelegt ist, eine Verformung des galvanischen Elementes zu erfassen, so kann die Steuereinrichtung basierend auf der erfassten Verformung einen Schädigungsgrad der Batteriezelle ermitteln. Abhängig von diesem Schädigungsgrad kann die Steuereinrichtung das elektronische Schaltelement zum Begrenzen eines Stromflusses ansteuern. Mit anderen Worten bedeuten dies, dass der von der Batteriezelle entnommene Strom oder der der Batteriezelle zugeführte Strom begrenzt, also auf einem Wert kleiner dem Maximalstromwert verringert wird. Dazu wird das elektronische Schaltelement in dem linearen Bereich betrieben. Somit kann in vorteilhafter Weise eine Betriebstrategie an einen Zustand, beispielsweise an ein Alter oder einen Schädigungsgrad, der Batteriezelle angepasst und dadurch eine Restlebensdauer der Batteriezelle verlängert werden.

Besonders bevorzugt ist die zumindest eine Sensoreinrichtung dazu ausgelegt, einen Isolationswiderstand zwischen dem galvanischen Element und dem Batteriezellengehäuse zu erfassen, Außerdem ist die Steuereinrichtung dazu ausgelegt, die Schalteinrichtung zum Überbrücken der Anschlüsse zu schließen und das elektronische Schaltelement zum Begrenzen des Stromes anzusteuern, falls der Isolationswiderstand einen vorgegebenen Schwellwert des Isolationswiderstandes unterschreitet.

Das Batteriezellengehäuse kann als zweiteiliges Aluminiumgehäuse ausgestaltet sein, wobei die zwei Teile nach Integration des galvanischen Elementes beziehungsweise des Batteriezellwickels "gasdicht" miteinander verschweißt werden können. Dabei ist das galvanische Element beziehungsweise sind insbesondere die Elektroden des galvanischen Elementes gegenüber dem elektrisch leitfähigen Batteriezellengehäuse isoliert. Dazu kann beispielsweise ein isolierendes Material zwischen einer Innenseite einer Wand der Batteriezellengehäuses und dem galvanischen Element angeordnet sein. Zur Überprüfung einer fehlerfreien Isolation wird mittels der Sensoreinrichtung, welche im vorliegenden Fall als ein sogenannter Isolationswächter ausgestaltet ist, der Isolationswiderstand zwischen dem Batteriezellengehäuse und dem galvanischen Element ermittelt und mit dem vorgegebenen Schwellwert für den Isolationswiderstand verglichen. Sobald der gemessene Isolationswiderstand den Schwellwert unterschreitet, also sobald das galvanische Element niederohmig mit dem Batteriezellengehäuse verbunden ist, deutet dies auf eine fehlerhafte Isolation hin. Eine solche fehlerhafte Isolation kann zur Folge haben, dass der Strom über das elektrisch leitfähige Batteriezellengehäuse geführt wird. Bei Vorliegen der fehlerhaften Isolation steuert die Steuereinrichtung das elektronische Schaltelement zum Sperren des Stromes an. Das elektronische Schaltelement wird also in dem Sperrbereich betrieben. Um nun zu verhindern, dass in einer Reihenschaltung aus Batteriezellen der Stromfluss unterbrochen wird, steuert die Steuereinrichtung zusätzlich die Schalteinrichtung zum Schließen und damit zum Überbrücken derjenigen Batteriezelle mit der fehlerhaften Isolation an. Trotz der fehlerhaften Batteriezelle bleibt also die Batterie in vorteilhafter Weise funktionstüchtig.

Gemäß einer Weiterbildung der Erfindung weist die Batteriezelle eine Speichereinrichtung zum Speichern der von der zumindest einen Sensoreinrichtung erfassten physikalischen und/oder chemischen Eigenschaft der Batteriezelle auf, wobei die Steuereinrichtung dazu ausgelegt ist, in Abhängigkeit der von der Speichereinrichtung gespeicherten physikalischen und/oder chemischen Eigenschaft die Schalteinrichtung zum Überbrücken der Anschlüsse zu schließen. In der Speichereinrichtung können beispielsweise über die Zeit die Signale aller Sensoren abgespeichert werden. Somit kann insbesondere eine Änderung der physikalischen und/oder chemischen Eigenschaft der Batteriezelle über die Zeit, beispielsweise von einem Anfangszustand (BoL - Begin of Life) bis zum einem Endzustand (EoL - End of Life) der Batteriezelle, beobachtet werden. Es kann also eine Historie der Batteriezelllebens erstellt werden. So können beispielsweise besondere Ereignisse, beispielsweise eine besonders hohe Beschleunigung, welcher die Batteriezelle ausgesetzt war, dokumentiert und jederzeit abgerufen werden.

Als mögliche Speichereinrichtungen können beispielsweise sogenannte (Ultra-)Low-Energy-Speicher oder FRAM (Ferroelectric Random Access Memory) zur Anwendung gebracht werden. Zudem bieten sich OTP-Speichersysteme (One Time Programmable) für sämtliche elektronische programmierbare Bauelemente an, welche durch eine Zusatzlogik gegen Manipulationen gesichert werden können, indem sie beispielsweise. Seriennummern bzw. eineindeutige Identifikationsdaten beinhalten oder erstmalig bei Aktivierung geschrieben werden. Die Batteriezelle sowie alle Informationen über die Batteriezelle können somit besonders gut gegen Manipulationen geschützt werden.

In einer Ausführungsform der Erfindung weist die Batteriezelle eine Kommunikationseinrichtung zum Kommunizieren mit einer übergeordneten Steuervorrichtung und/oder mit einer anderen Batteriezelle auf. Eine solche Kommunikationseinrichtung ist bevorzugt als eine Drahtlosübertragungseinrichtung ausgeführt, welche beispielsweise Daten über Bluetooth oder WLAN versendet. Diese Daten, welche beispielsweise den Ladezustand der jeweiligen Batteriezellen angeben, können beispielsweise an ein Batteriemanagementsystem oder an die Steuereinrichtung einer anderen gleichartigen Batteriezelle übertragen werden. So kann beispielsweise bei unterschiedlichen Ladezuständen der seriell geschalteten Batteriezellen ein Ladezustandsausgleich, ein sogenanntes Balancing, durchgeführt werden. Ein solches Balancing kann ein sogenanntes passives Balancing sein, bei welchem die am stärksten geladenen Batteriezellen gezielt über einen schaltbaren Widerstand entladen werden, welcher bevorzugt derart am Batteriezellengehäuse angeordnet ist, dass die durch den Widerstand in Wärme umgewandelte Energie der Batteriezelle über das Batteriezellengehäuse abgeführt werden kann. Auch kann ein Balancing aktiv erfolgen, bei welchem die am schwächsten geladenen Batteriezellen gezielt geladen werden. Dies kann beispielsweise durch kapazitive Energieübertragung über die Batteriezellengehäuse zweier Batteriezellen oder auch durch induktive Energieübertragung erfolgen.

Durch die Kommunikationseinrichtung kann also in vorteilhafter Weise ein Zustand der gesamten Batterie jederzeit erfasst und überwacht werden und somit eine Lebensdauer der gesamten Batterie verlängert werden.

Eine weitere vorteilhafte Ausgestaltung der Erfindung sieht vor, dass die zumindest eine Sensoreinrichtung und/oder die Steuereinrichtung und/oder die Speichereinrichtung zur Energieversorgung jeweils eine Energiewandeleinrichtung aufweisen, welche dazu ausgelegt ist, eine Umgebungsenergie in elektrische Energie umzuwandeln. Die Energiewandeleinrichtungen sind dabei als sogenannte Energie-Ernte-Sensoren beziehungsweise Energy-Harvesting-Sensoren ausgestaltet. Als Energie-Ernten beziehungsweise Energy-Harvesting bezeichnet man die Gewinnung kleiner Mengen von elektrischer Energie aus Umgebungsenergiequellen wie Umgebungstemperatur, Vibrationen, Luftströmungen Licht und magnetischen Wellen. Die dafür eingesetzten Strukturen, also die Energiewandeleinrichtungen, werden auch als Nanogeneratoren bezeichnet.

Solche Nanogeneratoren können beispielsweise piezoelektrische Kristalle sein, welche bei Krafteinwirkung, beispielsweise durch Druck, Vibration oder Schall, eine elektrische Spannung erzeugen, und/oder thermoelektrische Generatoren und pyroelektrische Kristalle, welche aus Temperaturunterschieden elektrische Energie gewinnen, und/oder Antennen, insbesondere passive RFIDs, welche Energie von Radiowellen beziehungsweise elektromagnetische Strahlung auffangen und energetisch verwenden, und/oder Sensoren, welche Licht basierend auf dem fotoelektrischen Effekt in elektrische Energie umwandeln. Energy-Harvesting vermeidet bei Drahtlostechnologien Einschränkungen durch kabelgebundene Stromversorgung oder gesonderte oder separate Batterien.

Zur Erfindung gehört außerdem eine Batterie aufweisend insbesondere eine Reihenschaltung von zumindest zwei erfindungsgemäßen Batteriezellen.

Ein erfindungsgemäßes Kraftfahrzeug umfasst zumindest eine erfindungsgemäße Batterie. Das Kraftfahrzeug kann beispielsweise als Personenkraftwagen, insbesondere als ein Elektro- oder Hybridkraftwagen ausgestaltet sein. Das Kraftfahrzeug kann aber auch als ein elektrisch betriebenes Motorrad oder Fahrrad ausgeführt sein.

Es ist aber auch möglich, die Batterie in einem stationären Energiespeichersystem vorzusehen. Dabei kann es beispielsweise vorgesehen sein, dass die Batterie, welche in einem Kraftfahrzeug bereitgestellt war, als sogenannte Second Life Batterie in dem stationären Energiespeichersystem weiterverwendet wird.

Die mit Bezug auf die erfindungsgemäße Batteriezelle vorgestellten bevorzugten Ausführungsformen und deren Vorteile gelten entsprechend für die erfindungsgemäße Batterie sowie das erfindungsgemäße Kraftfahrzeug.

Im Folgenden wird die Erfindung nun anhand eines bevorzugten Ausführungsbeispiels, wie auch unter Bezugnahme auf die beigefügten Zeichnungen näher erläutert.

Es zeigt die einzige Figur eine schematische Darstellung einer Ausführungsform einer Batteriezelle, welche eine Vielzahl von Sensoreinrichtungen und eine Überbrückungseinrichtung aufweist.

Bei dem im Folgenden erläuterten Ausführungsbeispiel handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

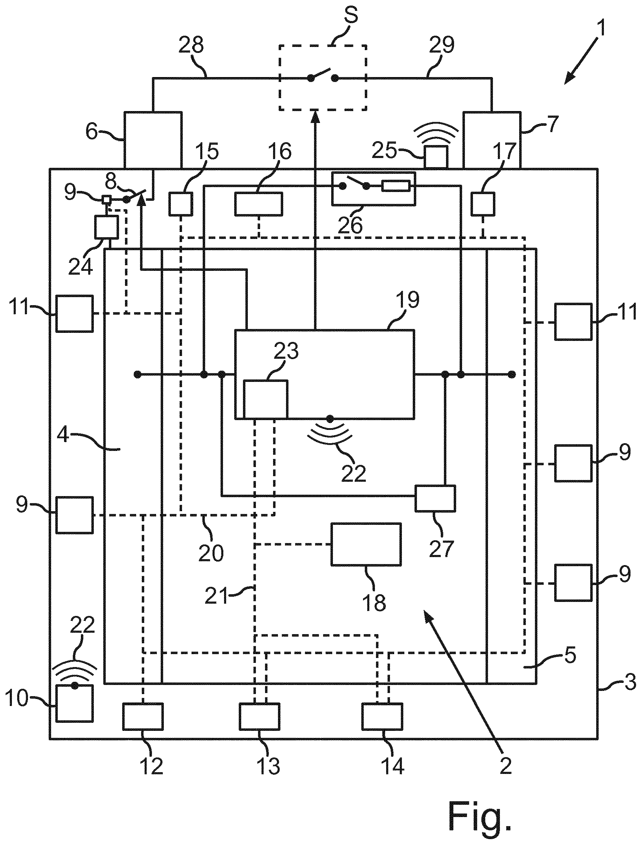

Fig. 1 zeigt eine Batteriezelle 1 mit einem galvanischen Element 2 beziehungsweise einem Batteriezellwickel sowie einem Batteriezellengehäuse 3. Dabei ist das galvanische Element 2 in dem Batteriezellengehäuse 3 angeordnet. Das Batteriezellengehäuse 3 kann beispielsweise aus Aluminium gefertigt sein. Das galvanische Element 2 weist eine erste Elektrode 4 und eine zweite Elektrode 5 auf. Das Batteriezellengehäuse 3 weist zwei Anschlüsse 6, 7 auf, wobei hier die erste Elektrode 4 über ein elektronisches Schaltelement 8 mit dem ersten Anschluss 6 verbunden ist und die zweite Elektrode 5 direkt mit dem zweiten Anschluss 7 verbunden ist. Es kann aber auch vorgesehen sein, dass die zweite Elektrode 5 und der zweite Anschluss 7 über ein weiteres elektronisches Schaltelement miteinander verbunden sind. Das elektronische Schaltelement 8 ist insbesondere als ein Halbleiterschalter ausgestaltet, über welchen ein Stromfluss durch Anlegen einer Steuerspannung gesteuert werden kann.

Über die Anschlüsse 6, 7 kann die von dem galvanischen Element 2 bereitgestellte Energie einer elektrischen Komponente zum Versorgen derselben zugeführt werden. Auch kann der Batteriezelle 1 über die Anschlüsse 6, 7 elektrische Energie zum Laden zugeführt werden. Über die Anschlüsse 6, 7 kann die Batteriezelle 1 auch, insbesondere seriell, mit anderen gleichartigen Batteriezellen 1 zu einer Batterie zusammengeschaltet werden. Eine solche Batterie kann beispielsweise in einem hier nicht gezeigten Kraftfahrzeug zum Antreiben des Kraftfahrzeugs angeordnet werden. Eine solche Batterie kann aber auch in einem hier nicht gezeigten stationären Energieversorgungssystem vorgesehen sein.

Darüber hinaus weist die Batteriezelle 1 eine Schalteinrichtung S auf, mittels welcher die Anschlüsse 6, 7 elektrisch miteinander verbindbar sind und die Batteriezelle 1 dadurch überbrückbar ist. Die Schalteinrichtung S kann beispielsweise ein Relais oder einen Halbleiterschalter umfassen. Die Schalteinrichtung S kann aber auch eine Hybridvariante, welche eine Serienschaltung aus Relais und Halbleiterschalter aufweist, umfassen.

Dabei ist die Schalteinrichtung S über eine erste Stromschiene 28 mit dem ersten Anschluss 6 verbindbar und über eine zweite Stromschiene 29 mit dem zweiten Anschluss verbindbar. Die Schalteinrichtung S kann auch innerhalb des Batteriezellengehäuses 3 angeordnet und mit diesem thermisch gekoppelt sein und somit in vorteilhafter Weise über das Batteriezellengehäuse 3 gekühlt werden.

Außerdem weist die Batteriezelle 1 hier eine Vielzahl von Sensoreinrichtungen 9, 10, 11, 12, 13, 14, 15, 16, 17, 18 zum Erfassen von physikalischen und/oder chemischen Eigenschaften der Batteriezelle 1 und eine Steuereinrichtung 19 auf.

Die Sensoreinrichtungen 9, 10, 11, 12, 13, 14, 15, 16, 17, 18 sind dazu ausgelegt, über Signalpfade 20, 21, 22 mit der Steuereinrichtung 19 zu kommunizieren. So bilden hier die Sensoreinrichtungen 9, 11, 12, 13, 14, 15, 16, 17 gemeinsam mit der Steuereinrichtung 19 Netzwerkknoten eines Netzwerkes aus, welches als Netzwerktopologie hier eine Bus-Topologie aufweist. Der Signalpfad 20 kann dabei als Leitung, beispielsweise elektrische Leitung oder optische Leitung, ausgebildet sein. Es kann aber auch sein, dass die Sensoreinrichtungen 9, 11, 12, 13, 14, 15, 16, 17 drahtlos, beispielsweise über WLAN, RFID, Bluetooth oder Lichtpulse, mit der Steuereinrichtung 19 kommunizieren. Dabei kann jede der Sensoreinrichtungen 9, 11, 12, 13, 14, 15, 16, 17 entweder direkt oder über eine andere der Sensoreinrichtungen 9, 11, 12, 13, 14, 15, 16, 17 mit der Steuereinrichtung 19 kommunizieren. Mit anderen Worten bedeutet dies, dass jede der Sensoreinrichtungen 9, 11, 12, 13, 14, 15, 16, 17 das Signal einer anderen der Sensoreinrichtungen 9, 11, 12, 13, 14, 15, 16, 17 weiterleiten kann. Es sind auch andere Netzwerktopologien, beispielsweise ein vollvermaschtes Netz, ein vermaschtes Netz, eine Baum-Topologie, einen Linien-Topologie oder eine Sterntopologie möglich. Bei einer derartigen Ausgestaltung der Batteriezelle 1 können redundante Signalübertragungspfade gebildet werden.

Die Sensoreinrichtung 10 kommuniziert hier über eine Drahtlosverbindung 22, beispielsweise WLAN oder Bluetooth, direkt mit der Steuereinrichtung 19.

Die Sensoreinrichtungen 13, 14, 18 kommunizieren hier über ein Bussystem 21, beispielsweise einen LIN, CAN, I²C, SPI, UART, mit der Steuereinrichtung 19. Die Steuereinrichtung 19 weist dazu entsprechende Schnittstellen beziehungsweise Interfaces auf.

Die Sensoreinrichtungen 9, 10 sind beispielsweise als Temperatursensoren ausgebildet, welche eine Temperatur innerhalb des Batteriezellengehäuses 3 erfassen. Die Sensoreinrichtungen 11 sind beispielsweise als Sensoren zur Messung eines Isolationswiderstandes zwischen dem galvanischen Element 2 und dem Batteriezellengehäuse 3 ausgebildet. Mittels der Isolationsmessung kann festgestellt werden, ob eine niederohmige, elektrisch leitende Verbindung zwischen dem Batteriezellengehäuse 3 und dem galvanischen Element 2 oder eine hochohmige, isolierende Verbindung zwischen dem Batteriezellengehäuse 3 und dem galvanischen Element 2 besteht. Die Sensoreinrichtung 12 ist hier als ein Dichtesensor zur Messung einer Dichte des Elektrolyten des galvanischen Elementes 2, die Sensoreinrichtung 13 als ein Leitfähigkeitssensor zur Messung einer Leitfähigkeit des Elektrolyten und die Sensoreinrichtung 14 als ein Spektral-Analyse-Sensor zur Messung einer chemischen Zusammensetzung des Elektrolyten ausgestaltet. Die Sensoreinrichtung 15 ist als ein Drucksensor zur Messung eines Druckes innerhalb des Batteriezellengehäuses 3 ausgeführt. Die Sensoreinrichtung 16 ist hier als ein Gassensor ausgeführt, mittels welchem beispielesweise eine Zersetzung des Elektrolyten feststellbar ist. Die Sensoreinrichtung 17 ist hier ein Beschleunigungssensor zur Messung einer Beschleunigung, welcher die Batteriezelle 1 ausgesetzt ist. Die Sensoreinrichtung 18 ist als ein Kraftsensor ausgestaltet, mittels welchem eine Verformung der Batteriezelle 1 messbar ist.

Die Daten all dieser Sensoreinrichtung 9, 10, 11, 12, 13, 14, 15, 16, 17, 18 werden der Steuereinrichtung 19 bereitgestellt, welche hier mit den Elektroden 4, 5 des galvanischen Elementes 2 verbunden ist. Somit kann eine stabile Strom- und Spannungsversorgung der Steuereinrichtung 19 gewährleistet werden. Die Steuereinrichtung 19 kann dabei zusätzlich einen EMV-Filter (EMV - Elektromagnetische Verträglichkeit) sowie eine Spannungsmesseinheit aufweisen. Außerdem kann die Steuereinrichtung 19 zum sicheren Übertragen und Speichern von Daten eine sogenannte Security-Einheit aufweisen. Die Security-Einheit ist dabei beispielsweise zur Verschlüsselung und Entschlüsselung der Daten ausgelegt.

Die Steuereinrichtung 19 ist nun dazu ausgelegt, basierend auf den Sensordaten batteriespezifische Kenngrößen der Batteriezelle 1, beispielsweise einen Schädigungsgrad oder einen Ladezustand der Batteriezelle 1, zu ermitteln. Auch kann von der Steuereinrichtung 19 eine Impedanzanalyse beziehungsweise Impedanzmikroskopie innerhalb der Batteriezelle 1 durchgeführt werden, um den komplexen Innenwiderstand als Funktion der Frequenz und/oder der Temperatur zu ermitteln. Die Sensordaten können außerdem in einer Speichereinrichtung 23 abgespeichert werden, um beispielsweise die Batteriezelle 1 über ihre gesamte Lebenszeit zu überwachen. In der Speichereinrichtung können beispielsweise der Ladezustand (State of Charge), der SoH (State of Health), Stromverläufe, Strom-Peaks, Trends oder Gradienten sämtlicher Daten der Sensoreinrichtungen 9, 10, 11, 12, 13, 14, 15, 16, 17, 18, Temperaturverläufe, Kennlinienfelder und geschützte Quellcodes hinterlegt werden. Mittels der aus dem Speicher 23 auslesbaren Daten kann beispielsweise ohne weitere Tests ausgewertet werden, ob die Batterie für eine Wiederverwendung, ein sogenanntes Second Life, beispielsweise in einem stationären Energiespeichersystem, geeignet ist. Zum Schreiben der Daten in die Speichereinrichtung 23 können die Daten beispielsweise durch einen auf der Steuereinrichtung 19 hinterlegten Algorithmus komprimiert werden. Das Schreiben der Daten kann kontinuierlich, zu definierten Zeitpunkten oder ereignisgesteuert erfolgen.

Basierend auf den batteriespezifischen Kenngrößen ist die Steuereinrichtung 19 dazu ausgelegt, das Schaltelement S zum Schließen und damit zum Überbrücken der Batteriezelle 1 anzusteuern. Wenn beispielsweise durch die Sensoreinrichtung 11 ein Isolationsfehler festgestellt wurde, so wird dies der Steuereinrichtung 19 übermittelt, welche daraufhin die Schalteinrichtung S zum Schließen ansteuert.

Außerdem ist die Steuereinrichtung 19 dazu ausgelegt, den Strom zwischen dem ersten Anschluss 7 und der ersten Elektrode 4 in Abhängigkeit der erfassten physikalischen und/oder chemischen Eigenschaften, beispielsweise als Funktion über die Lebensdauer der Batteriezelle 1, dynamisch anzupassen, beispielsweise zu begrenzen beziehungsweise zu verringern. Bei einem Isolationsfehler ist es besonders vorteilhaft, wenn die Steuereinrichtung 19 zusätzlich das elektronische Schaltelement 8 zum Sperren eines Stromflusses zwischen der Elektrode 4 und dem Anschluss 6 ansteuert.

Um den Stromfluss zwischen der ersten Elektrode 4 und dem ersten Anschluss 6 zu überwachen, ist hier ein hochgenauer Stromsensor 24 zwischen der Elektrode 4 und dem Anschluss 6 angeordnet.

Umgekehrt kann die Steuereinrichtung 19 auch Signale an die Sensoreinrichtungen 9, 10, 11, 12, 13, 14, 15, 16, 17, 18 zum Betreiben der Sensoreinrichtungen 9, 10, 11, 12, 13, 14, 15, 16, 17, 18 versenden.

Außerdem weist die Batteriezelle 1 hier eine Kommunikationseinrichtung 25 auf, welche dazu ausgelegt ist, mit einem hier nicht dargestellten übergeordneten Batteriemanagementsystem und/oder einer anderen gleichartigen Batteriezelle 1 zu kommunizieren. Mittels der Kommunikationseinrichtung 25 können die von der Steuereinrichtung 19 ermittelten batteriespezifischen Kenngrößen, beispielsweise der Ladezustand der Batteriezelle 1, an das übergeordnete Batteriemanagementsystem übermittelt werden, welches den übermittelten Ladezustand mit den Ladezuständen der anderen Batteriezellen der Batterie vergleicht. Wenn die Batteriezelle 1 beispielsweise einen im Vergleich zu anderen Batteriezellen höheren Ladezustand aufweist, so kann ein sogenanntes passives Balancing mittels eines schaltbaren Widerstands 26 durchgeführt werden. Dazu wird dem galvanischen Element 2 gezielt elektrische Energie entzogen und über den schaltbaren Widerstand 26 in Wärmeenergie umgewandelt. Die Batteriezelle 1 wird also entladen. Dabei ist es besonders vorteilhaft, wenn der schaltbare Widerstand 26 thermisch mit dem Batteriezellengehäuse 3 gekoppelt ist, sodass die in Wärme ungewandelte elektrische Energie über das Batteriezellengehäuse 3 an die Umgebung abgeführt werden kann.

Auch kann es vorgesehen sein, dass die Batteriezelle 1 mittels eines sogenannten aktiven Balancing entladen wird und die Entladeenergie über eine Energieübertragungseinrichtung 27 einer anderen, niedriger geladenen Batteriezelle zum Laden zugeführt wird. Umgekehrt kann die Batteriezelle 1 auch über die Energieübertragungseinrichtung 27 geladen werden. Die Energieübertragungseinrichtung 27 kann Energie beispielsweise kapazitiv oder induktiv übertragen.

Dabei können durch die Steuereinrichtung 19 intelligente Ladestrategien individuell für die Batteriezelle 1 vorgegeben werden, um durch optimales Laden und Entladen die Lebensdauer der Batteriezelle 1 zu verlängern. Dazu kann eine Ladesäule, also eine Vorrichtung zum Bereitstellen der Ladeenergie, beispielsweise von der Steuereinrichtung 19 über die Kommunikationseinrichtung 25 aktiv über den tatsächlichen Zustand der Batteriezelle 1 informiert werden. So kann das Laden bei kritischen Zuständen der Batteriezelle 1 aktiv abgeschaltet werden.

Auch kann jede der Sensoreinrichtungen 9, 10, 11, 12, 13, 14, 15, 16, 17, 18 und/oder die Steuereinrichtung 19 und/oder die Speichereinrichtung 23 jeweils eine hier nicht dargestellte Energiewandeleinrichtung aufweisen, welche als sogenannte Energie-Ernte-Sensoren beziehungsweise Energy-Harvesting-Sensoren ausgestaltet ist. Als Energy-Harvesting bezeichnet man die Gewinnung kleiner Mengen von elektrischer Energie aus Quellen wie Umgebungstemperatur, Vibrationen oder Luftströmungen. Die dafür eingesetzten Strukturen, also die Energiewandeleinrichtungen, werden auch als Nanogeneratoren bezeichnet. Energy-Harvesting vermeidet bei Drahtlostechnologien Einschränkungen durch kabelgebundene Stromversorgung oder gesonderte oder separate Batterien.

Solche Nanogeneratoren können beispielsweise piezoelektrische Kristalle sein, welche bei Krafteinwirkung, beispielsweise durch Druck, Vibration oder Schall, eine elektrische Spannung erzeugen, und/oder thermoelektrische Generatoren und pyroelektrische Kristalle, welche aus Temperaturunterschieden elektrische Energie gewinnen, und/oder Antennen, insbesondere passive RFIDs, welche Energie von Radiowellen beziehungsweise elektromagnetische Strahlung auffangen und energetisch verwenden, und/oder Sensoren, welche Licht basierend auf dem fotoelektrischen Effekt in elektrische Energie umwandeln.

Auch können sämtliche Elektronikkomponenten der Batteriezelle 1, also die Sensoreinrichtungen 9, 10, 11, 12, 13, 14, 15, 16, 17, 18 und/oder die Steuereinrichtung 19 und/oder die Speichereinrichtung 23, als sogenannte "Low-Power"-Ausführungen, insbesondere als "Ultra-Low-Power"-Ausführungen, realisiert werden. Dies bedeutet, dass die se Elektronikkomponenten einen besonders niedrigen Energieverbrauch aufweisen.

So können die Elektronikkomponenten beispielsweise in einem Schlafmodus ("DeepSleep") betrieben werden, in welchem die Elektronikkomponenten komplett deaktiviert werden, um Strom zu sparen. Eine Aktivierung kann beispielsweise über einen Befehl oder einen sogenannten Interrupt erfolgen. Eine Aktivierung kann dabei als ein Schnellstart ("FastStart") erfolgen, also als ein extrem schnelles "Hochfahren" beziehungsweise Fortsetzen des Funktionsablaufes beispielsweise innerhalb der Steuereinrichtung 19. Dazu sind in vorteilhafter Weise keine Initialisierungsroutinen erforderlich, da der zyklische Normalbetrieb einfach wieder fortgesetzt wird. Eine Aktivierung kann als auch als ein Aufwecken ("WakeUp") erfolgen, bei welchem sämtliche Funktionen beispielsweise ereignisgesteuert reaktiviert werden.

Somit wird Energie nur dann, beispielsweise zur Datenübertragung, verbraucht, wenn beispielsweise durch eine der Sensoreinrichtungen 9, 10, 11, 12, 13, 14, 15, 16, 17, 18 eine Änderung, insbesondere eine signifikante Änderung, der physikalischen und/oder chemischen Eigenschaft erfasst wurde. Eine solche Änderung ist beispielsweise eine Überschreitung oder Unterschreitung eines vorgegebenen Schwellwerts oder das Vorliegen neuer Minimal- oder Maximalwerte für eine physikalische und/oder chemische Eigenschaft der Batteriezelle 1.

Insbesondere ist die Steuereinrichtung 19 dazu ausgelegt, einen sicheren Betrieb bei gleichzeitig extrem niedriger Stromaufnahme zu ermöglichen. Dazu kann die Stromaufnahme über eine Reduzierung von Taktfrequenz und Betriebsspannung gesenkt werden. Auch können zusätzliche Spezialregisterfunktionen SRF oder spezielle Softwarebefehle vorgesehen sein.

Durch die Energiesparmaßnahmen kann, beispielsweise durch intelligente Programmierung der Elektronikkomponenten verhindert werden, dass die Batteriezelle 1 entladen wird, wenn die Elektronikkomponenten von dem galvanischen Element 2 selbst mit elektrischer Energie versorgt werden.

Die Berechnung und Analyse der Daten kann auch außerhalb der Batteriezelle 1 durchgeführt werden, indem die Daten, beispielsweise mittels der Kommunikationseinrichtung 25, auf eine leistungsstarke Recheneinheit übertragen werden. Die analysierten und berechneten Daten, also die Ergebnisse, können anschließend der Steuereinrichtung 19 der Batteriezelle 1 übermittelt werden, welche daraufhin beispielsweise die Schalteinrichtung S zum Schließen und/oder das elektronische Schaltelement 8 zum Begrenzen den Stromes ansteuert.

## Patentansprüche

1. Batteriezelle (1) für eine Batterie eines Kraftfahrzeugs mit einem galvanischen Element (2) mit einer ersten Elektrode (4) und einer zweiten Elektrode (5), einem Batteriezellengehäuse (3) mit einem ersten Anschluss (6) und einem zweiten Anschluss (7), zumindest einer Sensoreinrichtung (9, 10, 11, 12, 13, 14, 15, 16, 17, 18) zum Erfassen einer physikalischen und/oder chemischen Eigenschaft der Batteriezelle (1) und einer Steuereinrichtung (19), wobei das galvanische Element (2) in dem Batteriezellengehäuse (3) angeordnet ist, wobei die Batteriezelle (1) eine Schalteinrichtung (S) aufweist, mittels welcher der erste Anschluss (6) und der zweite Anschluss (7) elektrisch verbindbar sind, und die Steuereinrichtung (19) dazu ausgelegt ist, in Abhängigkeit der von der zumindest einen Sensoreinrichtung (9, 10, 11, 12, 13, 14, 15, 16, 17, 18) erfassten physikalischen und/oder chemischen Eigenschaft die Schalteinrichtung (S) zum Überbrücken der Batteriezelle (1) zu schließen, wobei zumindest eine der Elektroden (4, 5) über ein elektronisches Schaltelement (8) mit einem der Anschlüsse (6, 7) verbunden ist, wobei das elektronische Schaltelement (8) dazu ausgelegt ist, einen Stromfluss zwischen der Elektrode (4, 5) und dem jeweiligen Anschluss (6, 7) zu begrenzen, und die Steuereinrichtung (19) dazu ausgelegt ist, in Abhängigkeit der von der zumindest einen Sensoreinrichtung (9, 10, 11, 12, 13, 14, 15, 16, 17, 18) erfassten physikalischen und/oder chemischen Eigenschaft das elektronische Schaltelement (8) zum Begrenzen des Stromflusses anzusteuern,
**dadurch gekennzeichnet, dass**
die zumindest eine Sensoreinrichtung (9, 10, 11, 12, 13, 14, 15, 16, 17, 18) dazu ausgelegt ist, den erfassten Wert der physikalischen und/oder chemischen Eigenschaft nur dann an die Steuereinrichtung (19) zu übermitteln, falls der erfasste Wert in einem ersten Fall einen vorgegebenen Schwellwert überschreitet oder in einem zweiten Fall einen vorgegebenen anderen Schwellwert unterschreitet.

2. Batteriezelle (1) nach Anspruch 1,
**dadurch gekennzeichnet, dass**
die Schalteinrichtung (S) in dem Batteriezellengehäuse angeordnet und mit dem Batteriezellengehäuse (3) thermisch gekoppelt ist.

3. Batteriezelle (1) nach einem der Ansprüche 1 oder 2,
**dadurch gekennzeichnet, dass**
die zumindest eine Sensoreinrichtung (9, 10, 11, 12, 13, 14, 15, 16, 17, 18) dazu ausgelegt ist, einen Isolationswiderstand zwischen dem galvanischen Element (2) und dem Batteriezellengehäuse (3) zu erfassen, und die Steuereinrichtung (19) dazu ausgelegt ist, die Schalteinrichtung (S) zum Überbrücken der Anschlüsse (6, 7) zu schließen und das elektronische Schaltelement (8) zum Begrenzen des Stromes anzusteuern, falls der Isolationswiderstand einen vorgegebenen Schwellwert des Isolationswiderstandes unterschreitet.

4. Batteriezelle (1) nach einem der vorhergehenden Ansprüche,
**dadurch gekennzeichnet, dass**
die Batteriezelle (1) eine Speichereinrichtung (23) zum Speichern der von der zumindest einen Sensoreinrichtung (9, 10, 11, 12, 13, 14, 15, 16, 17, 18) erfassten physikalischen und/oder chemischen Eigenschaft der Batteriezelle (1) aufweist, wobei die Steuereinrichtung (19) dazu ausgelegt ist, in Abhängigkeit der von der Speichereinrichtung (23) gespeicherten physikalischen und/oder chemischen Eigenschaft die Schalteinrichtung (S) zum Überbrücken der Anschlüsse zu schließen.

5. Batteriezelle (1) nach einem der vorhergehenden Ansprüche,
**dadurch gekennzeichnet, dass**
die Batteriezelle (1) eine Kommunikationseinrichtung (25) zum Kommunizieren mit einer übergeordneten Steuervorrichtung und/oder mit einer anderen Batteriezelle aufweist.

6. Batteriezelle (1) nach einem der vorhergehenden Ansprüche,
**dadurch gekennzeichnet, dass**
die zumindest eine Sensoreinrichtung (9, 10, 11, 12, 13, 14, 15, 16, 17, 18) und/oder die Steuereinrichtung (19) und/oder die Speichereinrichtung (23) zur Energieversorgung jeweils eine Energiewandeleinrichtung aufweisen, welche dazu ausgelegt ist, eine Umgebungsenergie in elektrische Energie umzuwandeln.

7. Batterie mit zumindest zwei, insbesondere in Reihe geschalteten, Batteriezellen (1) nach einem der vorhergehenden Ansprüche.

8. Kraftfahrzeug mit zumindest einer Batterie nach Anspruch 7.

## Claims

1. Battery cell (1) for a battery of a motor vehicle comprising a galvanic element (2) with a first electrode (4) and a second electrode (5), a battery cell housing (3) with a first connection (6) and a second connection (7), at least one sensor apparatus (9, 10, 11, 12, 13, 14, 15, 16, 17, 18) for determining a physical and/or chemical characteristic of the battery cell (1), and a control apparatus (19), wherein the galvanic element (2) is arranged in the battery cell housing (3), wherein the battery cell (1) has a switching apparatus (S) by means of which the first connection (6) and the second connection (7) can be electrically connected, and the control apparatus (19) is designed to close the switching apparatus (S) for the purpose of shorting the battery cell (1), in accordance with the physical and/or chemical characteristic determined by the at least one sensor apparatus (9, 10, 11, 12, 13, 14, 15, 16, 17, 18), wherein at least one of the electrodes (4, 5) is connected to one of the connections (6, 7) via an electronic switching element (8), wherein the electronic switching element (8) is designed to limit a current flow between the electrode (4, 5) and the respective connection (6, 7), and the control apparatus (19) is designed to control the electronic switching element (8) for the purpose of limiting the current flow in accordance with the physical and/or chemical characteristic determined by the at least one sensor apparatus (9, 10, 11, 12, 13, 14, 15, 16, 17, 18),
**characterised in that**
the at least one sensor apparatus (9, 10, 11, 12, 13, 14, 15, 16, 17, 18) is designed to transmit the detected value of the physical and/or chemical characteristic to the control apparatus (19) only if the detected value exceeds a predefined threshold value in a first case or falls below a predefined other threshold value in a second case.

2. Battery cell (1) according to claim 1,
**characterised in that**
the switching apparatus (S) is arranged in the battery cell housing and is thermally coupled to the battery cell housing (3).

3. Battery cell (1) according to any one of claims 1 or 2,
**characterised in that**
the at least one sensor apparatus (9, 10, 11, 12, 13, 14, 15, 16, 17, 18) is designed to detect an insulation resistance between the galvanic element (2) and the battery cell housing (3), and the control apparatus (19) is designed to close the switching apparatus (S) for the purpose of shorting the connections (6, 7) and to control the electronic switching element (8) for the purpose of limiting the current if the insulation resistance falls below a predetermined threshold value of the insulation resistance.

4. Battery cell (1) according to any one of the preceding claims,
**characterised in that**
the battery cell (1) has a memory apparatus (23) for storing the physical and/or chemical characteristic of the battery cell (1) determined by the at least one sensor apparatus (9, 10, 11, 12, 13, 14, 15, 16, 17, 18), wherein the control apparatus (19) is designed to close the switching apparatus (S) for the purpose of shorting the connections in accordance with the physical and/or chemical characteristic stored by the memory apparatus (23).

5. Battery cell (1) according to any one of the preceding claims,
**characterised in that**
the battery cell (1) has a communication apparatus (25) for communicating with a superordinate control apparatus and/or with another battery cell.

6. Battery cell (1) according to any one of the preceding claims,
**characterised in that**
the at least one sensor apparatus (9, 10, 11, 12, 13, 14, 15, 16, 17, 18) and/or the control apparatus (19) and/or the memory apparatus (23) each have an energy conversion apparatus for energy supply, which is designed to convert an ambient energy into electrical energy.

7. Battery having at least two battery cells (1), in particular connected in series, according to any one of the preceding claims.

8. Motor vehicle having at least one battery according to claim 7.

## Revendications

1. Elément de batterie (1) pour une batterie de véhicule à moteur avec un élément galvanique (2) avec une première électrode (4) et une seconde électrode (5), un boîtier d'élément de batterie (3) avec une première borne (6) et une seconde borne (7), au moins un dispositif capteur (9, 10, 11, 12, 13, 14, 15, 16, 17, 18) pour détecter une propriété physique et/ou chimique de l'élément de batterie (1) et un dispositif de commande (19), dans lequel l'élément galvanique (2) est disposé dans le boîtier d'élément de batterie (3), dans lequel l'élément de batterie (1) présente un dispositif de commutation (S), au moyen duquel la première borne (6) et la seconde borne (7) peuvent être connectées électriquement, et le dispositif de commande (19) est conçu pour, en fonction de la propriété physique et/ou chimique détectée par le au moins un dispositif capteur (9, 10, 11, 12, 13, 14, 15, 16, 17, 18), fermer le dispositif de commutation (S) afin de ponter l'élément de batterie (1), dans lequel au moins l'une des électrodes (4, 5) est connectée à l'une des bornes (6, 7) via un élément de commutation électronique (8), dans lequel l'élément de commutation électronique (8) est conçu pour limiter un flux de courant entre l'électrode (4, 5) et la borne respective (6, 7), et le dispositif de commande (19) est conçu pour, en fonction de la propriété physique et/ou chimique détectée par le au moins un dispositif capteur (9, 10, 11, 12, 13, 14, 15, 16, 17, 18), commander l'élément de commutation électronique (8) afin de limiter le flux de courant,
**caractérisé en ce que**
le au moins un dispositif capteur (9, 10, 11, 12, 13, 14, 15, 16, 17, 18) est conçu pour transmettre la valeur détectée de la propriété physique et/ou chimique au dispositif de commande (19) uniquement si la valeur détectée dans un premier cas dépasse une valeur de seuil prédéterminée ou dans un second cas tombe en dessous d'une autre valeur de seuil prédéterminée.

2. Elément de batterie (1) selon la revendication 1,
**caractérisé en ce que**
le dispositif de commutation (S) est agencé dans le boîtier d'élément de batterie et est couplé thermiquement au boîtier d'élément de batterie (3).

3. Elément de batterie (1) selon l'une des revendications 1 ou 2,
**caractérisé en ce que**
le au moins un dispositif capteur (9, 10, 11, 12, 13, 14, 15, 16, 17, 18) est conçu pour détecter une résistance d'isolation entre l'élément galvanique (2) et le boîtier d'élément de batterie (3), et le dispositif de commande (19) est conçu pour fermer le dispositif de commutation (S) afin de ponter les bornes (6, 7) et pour commander l'élément de commutation électronique (8) afin de limiter le courant si la résistance d'isolation tombe en dessous d'une valeur de seuil prédéterminée de la résistance d'isolation.

4. Elément de batterie (1) selon l'une des revendications précédentes,
**caractérisé en ce que**
l'élément de batterie (1) présente un dispositif de stockage (23) pour stocker la propriété physique et/ou chimique de l'élément de batterie (1) détectée par le au moins un dispositif capteur (9, 10, 11, 12, 13, 14, 15, 16, 17, 18), dans lequel le dispositif de commande (19) est conçu pour, en fonction de la propriété physique et/ou chimique stockée par le dispositif de stockage (23), fermer le dispositif de commutation (S) afin de monter les bornes.

5. Elément de batterie (1) selon l'une des revendications précédentes,
**caractérisé en ce que**
l'élément de batterie (1) possède un dispositif de communication (25) pour communiquer avec un dispositif de commande de niveau supérieur et/ou avec un autre élément de batterie.

6. Elément de batterie (1) selon l'une quelconque des revendications précédentes,
**caractérisé en ce que**
le au moins un dispositif capteur (9, 10, 11, 12, 13, 14, 15, 16, 17, 18) et/ou le dispositif de commande (19) et/ou le dispositif de stockage (23), pour une alimentation en énergie, présentent chacun un dispositif de conversion d'énergie qui est conçu pour convertir une énergie ambiante en énergie électrique.

7. Batterie avec au moins deux éléments de batterie (1), en particulier connectés en série, selon l'une des revendications précédentes.

8. Véhicule à moteur avec au moins une batterie selon la revendication 7.
